# EUROPEAN PATENT APPLICATION

(11) **EP 2 197 174 A1**
(43) Date of publication of application: **16.06.2010**
(21) Application number: 09380184.3
(22) Date of filing: 10.12.2009
(51) Int. Cl.: H04L 29/06, G08B 25/00, H04L 12/24

(54) **Method for encryption and authentication of a data signal**

(30) Priority: 10.12.2008 ES 200803493
(71) Applicant: AVILA CHULIA, Antonio, 46023 Valencia (ES)
(72) Inventor: Avila Chulia, Antonio, 46023 Valencia (ES); Ballester Merelo, Francisco Jose, 46022 Valencia (ES); Martinez Peiro, Marcos Antonio, 46022 Valencia (ES)
(74) Representative: Ungria Lopez, Javier

(57) **Abstract**

Applicable to an alarm console (1) that performs bidirectional communication by means of TCP/IP between one or several alarm switches (2) and a receiver switch (3). The encryption process includes a frame size measurement; a wildcard characters insertion; an algorithm encryption; a frame consistency verification; and a wildcard character modification in case that any error is detected. The authentication process has an authentication by user number; an authentication by IP and port address; and a temporal authentication.

## Description

### OBJECT OF THE INVENTION

The present invention, as this specification expresses in its title, relates to a method for the encryption and authentication of a data signal that has as a main purpose increasing communication safety across networks such as the Internet. Although other applications are not discarded, the method of the invention is specially applicable to an alarm console that performs bidirectional communication by means of TPC/IP between one or several alarm switches and a receiver switch or control station.

### BACKGROUND OF THE INVENTION

Various registers related to the encryption and authentication of data signals are known such as, European patents with publication numbers 2,274,557; 2,294,066; 2,245,305; 2,291,483; and 2,263,820. The respective statements of these registers are: "system for providing encrypted data, system for decrypting encrypted data and method for providing a communication interface in said decryptor system", "method for data encryption transmitted from a peripheral module to a control unit of a coin-operated machine", "high security biometric authentication using pairs of public key/private key encryption", "end-to-end test between gateways on an IP network" and, "method and device to transfer SNMP messages by UDP with compression of periodically repeated sequences".

These registers of the state of the art present drawbacks because the encryptions and authentications provided therein lack of enough high security to be applied to communication within alarm systems in a suitable manner.

On the other hand, it is not known in the state of the art any method for encryption and authentication of data signals which presents the encryption steps and the various authentications provided by the method of the present invention.

Moreover, the conventional alarm systems lack suitable methods for avoiding the interception of information that crosses between the different elements composing it, presenting drawbacks that make it necessary to validate the received data to ensure at all times that they are correct and able to adequately respond to alarms warnings.

### DESCRIPTION OF THE INVENTION

In order to attain the objectives and avoid the aforementioned drawbacks, the invention consists of a method for the encryption and authentication of a data signal whereby the real information content to be transmitted by a data network such as the Internet is hidden; being specially applicable to an alarm console that performs bidirectional communication by means of TCP/IP between one or several alarm switches and a control station in order to facilitate the automatic configurations and changes without needing displacements in the various operational parameters.

Innovatively, according to the invention, the method thereof includes an encryption method with steps for:
- frame size measurement; such that all the information to be encoded should have a size multiple of 7 bytes, groups of 7 bytes arriving at 64 bit with a wildcard character of 1 byte which adds a random component to the encryption;
- insertion of the referred wildcard characters in such a way that the information blocks are completed in such a way that the length of each one of the frames stands as a multiple of 64-bit; being the wildcard character variable in each frame in order to obtain a random component;
- encryption by means of the algorithm called TEA, operating on the 64-bit blocks and using a 128-bit key;
- frame consistency verification, checking the value of every one of the encoded information bytes so that they do not match the data values that may cause the system to behave incorrectly (characters for start and end of frame and string end); and
- wildcard character modification in the case that any error is detected in the frame consistency, encrypting again the information by means of the TEA algorithm; this operation is repeated until there is no longer incorrect data in the frame;
- the method further includes an authentication method applicable to the information removed from decrypted data packages and has:
- an authentication by user number wherein every data package is provided with an information field wherein the user number where the information comes from, or goes to, is indicated, verifying in reception that that code is already recorded in the user database, and verifying in transmission that the code agrees with the one programmed in the corresponding equipment;
- an authentication by means of an IP and port address, such that after verifying that the information frame has a valid user code, the IP and port address information where the data come from, is removed; comparing in reception this information to the one stored in a database for all transmitters, and verifying in transmission if it agrees with any of the IP addresses from which data are accepted; and
- a temporal authentication, such that in each one of the frames the system time information is included, in such a way that for each information exchange is ensured that the difference between the time of information generation and the time of receiving it is not greater than 15 seconds, and so facilitating the maintenance of the whole corresponding system synchronized.

With the described configuration, the method of the invention presents the main advantages of providing high safety in the corresponding information transmission, making it almost impossible for said information to be captured by unauthorized systems and, the occurrence of errors that may affect the information content. In addition, with the method of the invention there are advantages related to the provision of an encryption and authentication system for data signal perfectly applicable to alarm systems wherein very reliable transmission of information is required and frequently carrying out frequent parameter changes.

Next, to facilitate a better understanding of this specification, and being an integral part thereof, figures in which the object of the invention has been represented with an illustrative and not limitative manner are attached.

### BRIEF DESCRIPTION OF THE FIGURES

**Figure 1****.-** Schematically represents, at a functional block level, an alarm system wherein the method of the present invention is applicable.
**Figure 2****.-** It is a flowchart wherein the encryption process used in the method of the present invention is schematically represented.
**Figure 3****.-** It is a flowchart which schematically represents an authentication method in reception used in the method of the present invention.
**Figure 4****.-** It is a flowchart which schematically represents an authentication process in transmission, used in the method of the present invention.

### DESCRIPTION OF AN EMBODIMENT OF THE INVENTION

Next, a description of an embodiment of the invention is further made referring to the numbering used in the Figures.

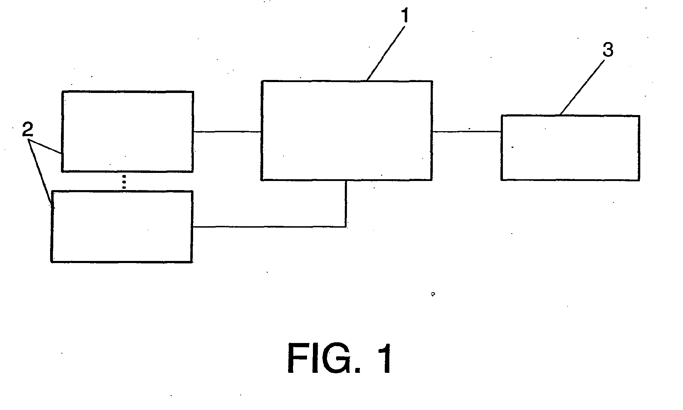

Thus, the method for the encryption and authentication of a data signal of the present example is applied to an alarm console 1 that performs bidirectional communication by means of TCP/IP between one or several alarm switches 2 and a control station or receiver switch 3, as it is represented in Figure 1.

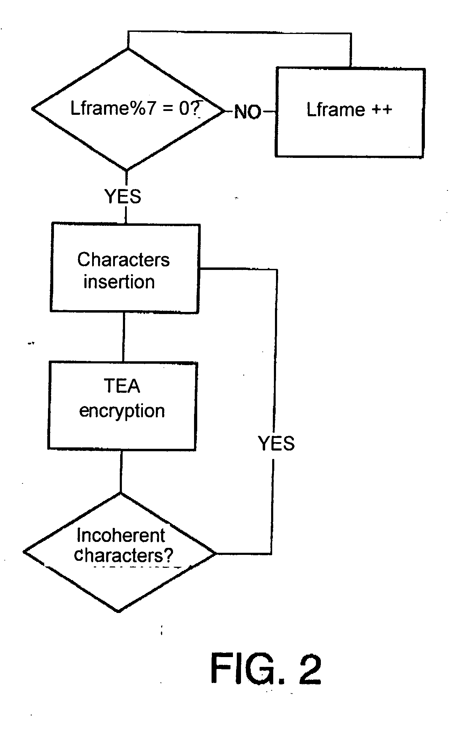

The encryption process of the method of the present example is represented in Figure 2 and it consists of a method whereby the real information content to be transmitted is hidden, by treating the data with encryption algorithms in the following steps:
- Frame size measurement: due to the used algorithm operating on 64-bit blocks, all the information to be encoded should have a size multiple of 7 bytes. In this way, completing 64 bit with a wildcard character further adds a random component to the encryption.
- Wildcard characters insertion: by means of this character the information blocks are completed in such a way that the length of each one of the frames stands as a multiple of 64-bit; being able to directly apply the TEA encryption algorithm. As the wildcard character is variable in each frame, a random component is further obtained, since the resulting encryption is totally different in encoding the same information bytes whereas the wildcard character is changed.
- Encryption by means of the TEA method: it consists of an algorithm for ciphering by blocks noteworthy for its description and implementation simplicity. It operates on 64-bit blocks and uses a 128-bit key.
- Frame consistency verification: after the encryption of the frame, its consistency is verified by checking the values of every one of the encoded information bytes in order that they do not agree with the mismatched data values that may cause the system to behave incorrectly (characters for start and end of frame and string end).
- Wildcard character modification; in the case that an error is detected in the frame consistency, returning to the original string, the wildcard characters are modified encrypting again the information by means of the TEA algorithm. This operation is repeated until there is no longer incorrect data in the frame;

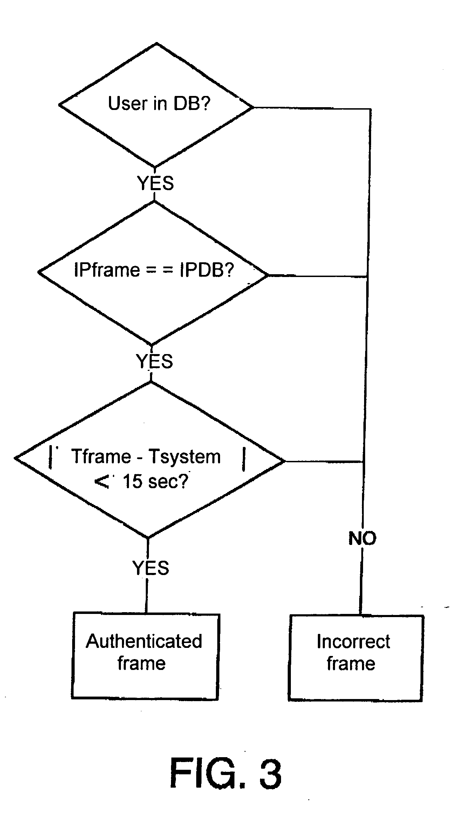

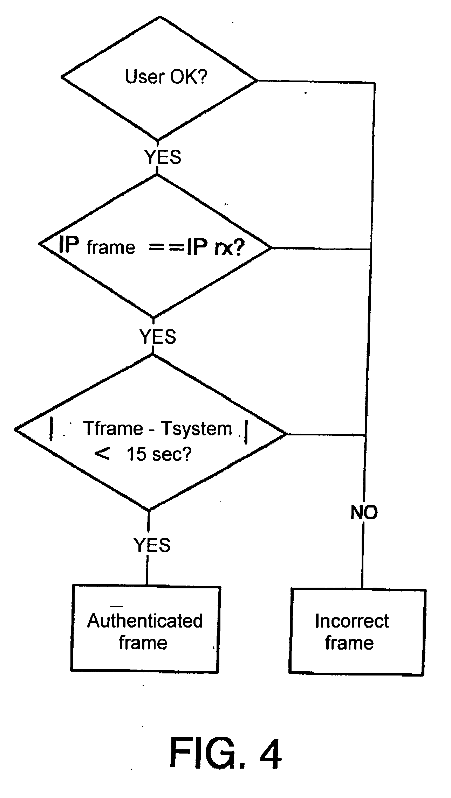

Moreover, the method of the present example includes an authentication process which has been represented in figures 3 and 4 by corresponding flowcharts, being the one in figure 3 for reception and the one in figure 4 for transmission.

This authentication process is carried out in order to achieve the security through the transmission channel across the Internet, having implemented authentication algorithms by means of information removed from encrypted data packages, and being included the following three types of authentication:
- Authentication by user number: each data packages must have an information field wherein the user number where the information comes from, or goes to, is indicated. In reception, it is verified that that code is already recorded in the user database. In transmission, it is verified that the code agrees with the one programmed in the corresponding equipment.
- Authentication by IP and port address: after verifying that the information frame has a valid user code, the IP and port address information from where the data comes from, is removed. In reception, this information is compared with the one stored in a database for all transmitters. In transmission, it is verified if it agrees with any of the IP addresses of which data is accepted.
- Temporal authentication: in each one of the frames the system time information is included, in such a way that for exchange information it is ensured that the difference between the time of information generation and the time of receiving is not greater than 15 seconds. Moreover, the whole system is maintained synchronized.

## Claims

1. **METHOD FOR ENCRYPTION AND AUTHENTICATION OF A DATA SIGNAL,** whereby the real information content to be transmitted by a data network such as the Internet, is hidden; being specially applicable to an alarm console (1) performing bidirectional communication by means of TCP/IP between one or several alarm switches (2) and a control station or a receiver switch (3) in order to facilitate the automatic configurations and changes without needing displacements in the various operational parameters; **characterized in that** it includes an encryption process with the steps for:
- frame size measurement; such that all the information to be encoded should have a size multiple of 7 bytes, groups of 7 bytes arriving at 64 bit with a wildcard character of 1 byte which adds a random component to the encryption;
- insertion of the referred wildcard characters in such a way that the information blocks are completed in such a way that the length of each one of the frames stands as a multiple of 64-bit; being the wildcard character variable in each frame in order to obtain a random component;
- encryption by means of the algorithm called TEA, operating on the 64-bit blocks and using a 128-bit key;
- frame consistency verification, checking the value of every one of the encoded information bytes so that they do not match the data values that may cause the system to behave incorrectly (characters for start and end of frame and string end); and
- wildcard character modification in the case that any error is detected in the frame consistency, encrypting again the information by means of the TEA algorithm; this operation is repeated until there is no longer incorrect data in the frame;
the method further includes an authentication process applicable to the information removed from decrypted data packages and has:
- an authentication by user number wherein every data package is provided with an information field wherein the user number where the information comes from, or goes to, is indicated, verifying in reception that that code is already recorded in the user database, and verifying in transmission that the code agrees with the one programmed in the corresponding equipment;
- an authentication by means of an IP and port address, such that after verifying that the information frame has a valid user code, the IP and port address information where the data come from, is removed; comparing in reception this information to the one stored in a database for all transmitters, and verifying in transmission if it agrees with any of the IP addresses from which data are accepted; and
- a temporal authentication, such that in each one of the frames the system time information is included, in such a way that for each information exchange is ensured that the difference between the time of information generation and the time of receiving it is not greater than 15 seconds, and so facilitating the synchronized maintenance of the whole corresponding system.
